# EUROPEAN PATENT SPECIFICATION

(11) **EP 2 245 598 B1**
(45) Date of publication and mention of the grant of the patent: **05.07.2017**
(21) Application number: 09702036.6
(22) Date of filing: 16.01.2009
(51) Int. Cl.: G06T 15/00

(54) **MULTI-BUFFER SUPPORT FOR OFF-SCREEN SURFACES IN A GRAPHICS PROCESSING SYSTEM**
MEHRPUFFERUNTERSTÜTZUNG FÜR AUSSERSCHIRM-OBERFLÄCHEN IN EINEM GRAFIKVERARBEITUNGSSYSTEM
SUPPORT MULTITAMPON POUR SURFACES HORS ÉCRAN DANS UN SYSTÈME DE TRAITEMENT GRAPHIQUE

(30) Priority: 18.01.2008 US 22195; 06.05.2008 US 116065
(43) Date of publication of application: 03.11.2010
(73) Proprietor: QUALCOMM Incorporated, San Diego, CA 92121 (US)
(72) Inventor: WEYBREW, Steven Todd, San Diego California 92121 (US); ELLIS, Brian, San Diego California 92121 (US)
(74) Representative: Carstens, Dirk Wilhelm
(86) International application number: PCT/US2009/031323
(87) International publication number: WO 2009/092033

(56) References cited:
- EP-A2- 0 525 986
- US-A- 5 001 469
- ANONYMOUS: "OpenGL 1.2 Reference Manual" IBM, [Online] 2002, XP002527145 Retrieved from the Internet: URL:http://publib.boulder.ibm.com/infocent er/pseries/v5r3/index.jsp?topic=/com.ibm.a ix.opengl/doc/openglrf/openglrf.htm> [retrieved on 2009-05-08]
- ANONYMOUS: "EGL double buffering" KHRONOS.ORG, [Online] 2007, XP002527146 Retrieved from the Internet: URL:http://www.khronos.org/message_boards/ viewtopic.php?f=13&t=970> [retrieved on 2009-05-08]

## Description

### RELATED APPLICATIONS

This application claims the benefit of U.S. Provisional Application No. 61/022,195, filed on January 18, 2008, the entire contents of which is incorporated herein by reference.

### TECHNICAL FIELD

This application relates to rendering and display of surfaces within a graphics processing system.

### BACKGROUND

Graphics processors are widely used to render two-dimensional (2D) and three-dimensional (3D) images for various applications, such as video games, graphics programs, computer-aided design (CAD) applications, simulation and visualization tools, and imaging. Display processors may then be used to display the rendered output for presentation to a user via a display device.

Graphics processors, display processors, or multi-media processors used in these applications may be configured to perform parallel and/or vector processing of data. General purpose CPU's (central processing units) with or without SIMD (single instruction, multiple data) extensions may also be configured to process data. In SIMD vector processing, a single instruction operates on multiple data items at the same time.

OpenGL^{®} (Open Graphics Library) is a standard specification that defines an API (Application Programming Interface) that may be used when writing applications that produce 2D and 3D graphics. (Other languages, such as Java, may define bindings to the OpenGL API's through their own standard processes.) The interface includes multiple function calls that can be used to draw scenes from simple primitives. Graphics processors, multi-media processors, and even general purpose CPU's can then execute applications that are written using OpenGL function calls. OpenGL ES (embedded systems) is a variant of OpenGL that is designed for embedded devices, such as mobile wireless phones, digital multimedia players, personal digital assistants (PDA's), or video game consoles. OpenVG™ (Open Vector Graphics) is another standard API that is primarily designed for hardware-accelerated 2D vector graphics.

EGL™ (Embedded Graphics Library) is an interface between multi-media client API's (such as OpenGL ES, OpenVG, and several other standard multi-media API's) and the underlying platform multi-media facilities. EGL can handle graphics context management, rendering surface creation, and rendering synchronization and enables high-performance, hardware accelerated, and mixed-mode 2D and 3D rendering. For rendering surface creation, EGL provides mechanisms for creating both on-screen surfaces (e.g., windows surfaces) and off-screen surfaces (e.g., pbuffers, pixmaps) onto which client API's (such as user application API's) can draw and share. On-screen surfaces are typically rendered directly into an active window's frame buffer memory. Off-screen surfaces are typically rendered into off-screen buffers for later use. Pbuffers are off-screen memory buffers that may be stored, for example, in memory space associated with OpenGL server-side (driver) operations. Pixmaps are off-screen memory areas that are commonly stored, for example, in memory space associated with a client application.

### SUMMARY

In general, the present disclosure describes various techniques for providing multi-buffer support for off-screen surfaces, such as pbuffer and pixmap surfaces. In one aspect, multi-buffer support for off-screen surfaces may be implemented within an EGL extension that enables the creation of a specified number of buffers, rather than a single or unknown number of buffers. An application developer may also use an API such as EGL to specify which buffer for an off-screen surface is current for read or write (draw) operations. In one aspect, multiple buffers may be provided for off-screen video surfaces and pre-rendered sprite animations. These multi-buffered surfaces and animations can then be combined with other 2D surface elements, 3D surface elements, and video surface elements via surface overlay functionality, which may occur along with or separately from rendering operations. For the purposes of this disclosure, a 2D surface is one that may be created by a 2D API, such as, for example, OpenVG. A 3D surface is one that may be created by a 3D API, such as, for example, OpenGL. A video surface is one that may be created by a video decoder, such as, for example, H.264 or MPEG4 (Moving Picture Experts Group version 4).

In one aspect, a method includes allocating multiple buffers that are all associated with an off-screen surface used in graphics processing, and identifying a first buffer within the buffers as a write buffer for the off-screen surface, such that information relating to the off-screen surface is written into the first buffer during a write operation. The method further includes identifying a second buffer within the buffers as a read buffer for the off-screen surface, such that information relating to the off-screen surface is read out of the second buffer during a read operation.

In another aspect, a device includes a buffer space and one or more processors. The one or more processors are configured to allocate multiple buffers within the buffer space that are all associated with an off-screen surface using in graphics processing. The one or more processors are further configured to identify a first buffer within the buffers as a write buffer for the off-screen surface and to further identify a second buffer within the buffers as a read buffer for the off-screen surface, such that information relating to the off-screen surface is written into the first buffer during a write operation and information relating to the off-screen surface is read out of the second buffer during a read operation.

In one aspect, a computer-readable medium includes instructions for causing one or more programmable processors to allocate multiple buffers that are all associated with an off-screen surface used in graphics processing, and to identify a first buffer within the buffers as a write buffer for the off-screen surface, such that information relating to the off-screen surface is written into the first buffer during a write operation. The computer-readable medium includes further instructions for causing the one or more programmable processors to identify a second buffer within the buffers as a read buffer for the off-screen surface, such that information relating to the off-screen surface is read out of the second buffer during a read operation.

The details of one or more aspects of the disclosure are set forth in the accompanying drawings and the description below. Other features, objects, and advantages will be apparent from the description and drawings, and from the claims.

### BRIEF DESCRIPTION OF DRAWINGS

FIG. 1A is a block diagram illustrating a device that may be used to implement multi-buffer support for off-screen surfaces, according to one aspect of the disclosure.
FIG. 1B is a block diagram illustrating a device that may be used to implement multi-format support for surface creation, according to another aspect of the disclosure.
FIG. 2A is a block diagram illustrating a device that may be used to implement multi-buffer support for off-screen surfaces, according to one aspect of the disclosure.
FIG. 2B is a block diagram illustrating further details of the API libraries that are shown in FIG. 2A, according to one aspect of the disclosure.
FIG. 2C is a block diagram illustrating further details of the drivers that are shown in FIG. 2A, according to one aspect of the disclosure.
FIG. 2D is a block diagram illustrating a device that may be used to implement multi-buffer support for off-screen surfaces, according to another aspect of the disclosure.
FIG. 3A is a block diagram illustrating an example of multiple off-screen surfaces that each are associated with multiple buffers, according to one aspect of the disclosure.
FIG. 3B is a block diagram illustrating an example of overlaid surface data associated with the off-screen surfaces shown in FIG. 3A, which may, in one aspect, be displayed on a display device.
FIG. 3C is a block diagram illustrating another example of the multiple off-screen surfaces that each are associated with differently identified read and write buffers, according to one aspect of the disclosure.
FIG. 3D is a block diagram illustrating an example of overlaid surface data associated with the off-screen surfaces shown in FIG. 3C, which may, in one aspect, be displayed on a display device.
FIG. 4 is a flow diagram of a method that may be performed by one or more of the control processor, graphics processor, and/or display processor shown in the graphics processing system of FIG. 1A, FIG. 1B, FIG. 2A, or FIG. 2D, according to one aspect of the disclosure.
FIG. 5 is a flow diagram of another method that may be performed by one or more of the control processor, graphics processor, and/or display processor shown in the graphics processing system of FIG. 1A, FIG. 1B, FIG. 2A, or FIG. 2D, according to one aspect of the disclosure.

### DETAILED DESCRIPTION

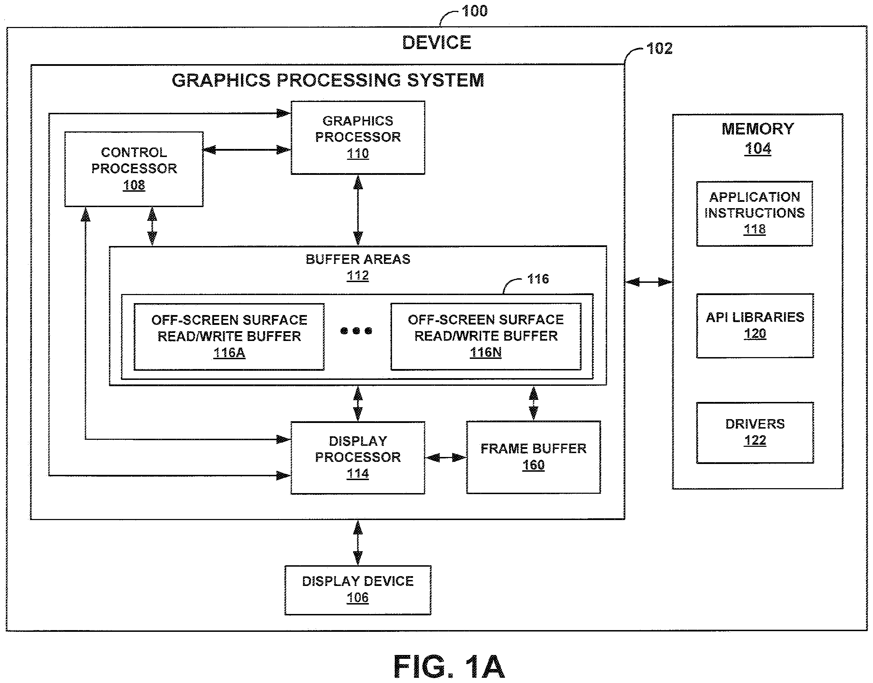

FIG. 1A is a block diagram illustrating a device 100 that may be used to implement multi-buffer support for off-screen surfaces, according to one aspect of the disclosure. Device 100 may be a stand-alone device or may be part of a larger system. For example, device 100 may comprise a wireless communication device (such as a wireless mobile handset), or may be part of a digital camera, digital multimedia player, personal digital assistant (PDA), video game console, or other video device. Device 100 may also comprise a personal computer (such as an ultra-mobile personal computer) or a laptop device. Device 100 may also be included in one or more integrated circuits, or chips, which may be used in some or all of the devices described above.

Device 100 is capable of executing various different applications, such as graphics applications, video applications, or other multi-media applications. For example, device 100 may be used for graphics applications, video game applications, video applications, applications which combine graphics and video, digital camera applications, instant messaging applications, mobile applications, video teleconferencing applications, video broadcasting applications, or video streaming applications.

Device 100 may be capable of processing a variety of different data types and formats. For example, device 100 may process still image data, moving image (video) data, or other multi-media data, as will be described in more detail below. The image data may include computer generated graphics data. Device 100 includes a graphics processing system 102, memory 104, and a display device 106. Programmable processors 108, 110, and 114 are logically included within graphics processing system 102. Programmable processor 108 may be a control, or general-purpose, processor. Programmable processor 110 may be a graphics processor, and programmable processor 114 may be a display processor. Control processor 108 may be capable of controlling both graphics processor 110 and display processor 114. Processors 108, 110, and 114 may be scalar or vector processors. In one aspect, device 100 may include other forms of multi-media processors.

In the example of FIG. 1A, graphics processing system 102 of device 100 is coupled both to a memory 104 and to a display device. Memory 104 may include any permanent or volatile memory that is capable of storing instructions and/or data. Display device 106 may be any device capable of displaying 3D image data, 2D image data, or video data for display purposes, such as an LCD (liquid crystal display) or a television (TV) display device.

Graphics processor 110 may be a dedicated graphics rendering device utilized to render, manipulate, and display computerized graphics. Graphics processor 110 may implement various complex graphics-related algorithms. For example, the complex algorithms may correspond to representations of two-dimensional or three-dimensional computerized graphics. Graphics processor 110 may implement a number of so-called "primitive" graphics operations, such as forming points, lines, and triangles or other polygon surfaces, to create complex, three-dimensional images on a display, such as display device 106.

In this disclosure, the term "render" may generally refer to 3D and/or 2D rendering. As examples, graphics processor 110 may utilize OpenGL instructions to render 3D graphics frames, or may utilize OpenVG instructions to render 2D graphics surfaces. However, any standards, methods, or techniques for rendering graphics may be utilized by graphics processor 110.

Graphics processor 110 may carry out instructions that are stored in memory 104. Memory 104 is capable of storing application instructions 118 for an application (such as a graphics or video application), API libraries 120, and drivers 122. Application instructions 118 may be loaded from memory 104 into graphics processing system 102 for execution. For example, one or more of control processor 108, graphics processor 110, and display processor 114 may execute one or more of instructions 118.

Control processor 108, graphics processor 110, and/or display processor 114 may also load and execute instructions contained within API libraries 120 or drivers 122 during execution of application instructions 118. Instructions 118 may refer to or otherwise invoke certain functions within API libraries 120 or drivers 122. Thus, when graphics processing system 102 executes instructions 118, it may also execute identified instructions within API libraries 120 and/or driver 122, as will be described in more detail below. Drivers 122 may include functionality that is specific to one or more of control processor 108, graphics processor 110, and display processor 114. In one aspect, application instructions 118, API libraries 120, and/or drivers 122 may be loaded into memory 104 from a storage device, such as a non-volatile data storage medium. In one aspect, application instructions 118, API libraries 120, and/or drivers 122 may comprise one or more downloadable modules that are downloaded dynamically, over the air, into memory 104.

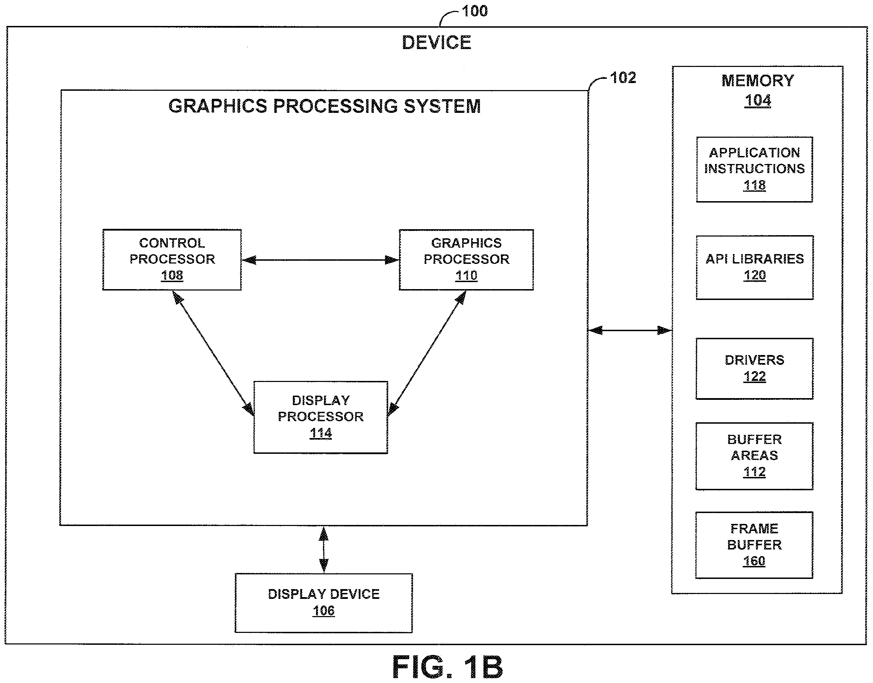

When graphics processor 110 renders a graphics surface, such as an on-screen surface or an off-screen surface, it may store such rendering data in buffer areas 112. Buffer areas 112 may be a data storage device such as any permanent or volatile memory capable of storing data, such as synchronous dynamic random access memory (SDRAM), embedded dynamic random access memory (eDRAM), or static random access memory (SRAM). In one aspect, buffer areas 112 may be included directly within memory 104, as is shown in FIG. 1B. Each graphics surface rendered is defined by its size and shape. The size and shape are not confined by the actual physical size of the display device 106 being used, as post-render scaling and rotation functions may be applied to the rendered surface by display processor 114.

Buffer areas 112 may include a plurality of off-screen surface buffers 116A-116N (collectively, 116). Each off-screen surface buffer 116A-116N is associated with a particular off-screen surface. For example, all of off-screen surface buffers 116A-116N may be associated with one specific off-screen surface that has been created by application instructions 118 during execution. Each buffer 116A-116N is capable of holding information about an off-screen surface, and may constitute a read buffer, a write buffer, or both.

Off-screen surfaces may be used in various contexts and for various purposes. For example, one or more off-screen surfaces may be combined with an on-screen surface, such as a window surface, to display a video player with 3D controls, to display animated cursors, or to display system state indicators (e.g., a wireless signal strength meter).

In one aspect, rendered output data for a surface (the rendered surface) is written into a write buffer by graphics processor 110. Thus, after graphics processor 110 has rendered an off-screen surface, it writes the rendered output data for the surface into one or more of buffers 116A-116N that are identified as write buffers. In this aspect, display processor 114 and graphics processor 110 are capable of reading rendered output data from one or more of buffers 116A-116N that are identified as read buffers. In some cases, display processor or graphics processor 110 are also capable of reading data from a file or over the air.

For example, display processor 114 may read rendered output data from one of buffers 116A-116N to prepare such data for display on display device 106. Display processor 114 is a processor that may perform post-rendering functions on a rendered graphics frame and for driving display device 106. Post-rendering functions may include scaling, rotation, blending, color-keying, and/or overlays. For example, display processor 114 may combine surfaces by using one of several blending modes, such as color keying with constant alpha blending, color-keying without constant alpha blending, full surface constant alpha blending, or full surface per-pixel alpha blending. Graphics processor 110 may also read rendered output data from one or more of buffers 116A-116N as texture sources. In some instances, control processor 108 may also read rendered output data from one or more of buffers 116A-116N.

In one aspect, graphics processor 110 renders a graphics surface and stores rendered graphics data in one of buffers 116A-116N that has been identified as a write buffer. When rendering is complete, the buffer may be re-identified as a read buffer, such that display processor 114 may retrieve the rendered graphics data. Graphics processor 110 may then render further data into another buffer in buffers 116 that has been identified as a write buffer. By having at least two buffers within buffers 116 that are associated with a particular off-screen surface, display processor 114 may read from one buffer while graphics processor 110 renders to another. Identifiers or pointers may be used to specify whether a given buffer 116A-116N is a read buffer or a write buffer. In some cases, as noted above, any of buffers 116A-116N may be identified as a read/write buffer, as well.

Display processor 114 is capable of reading rendered output data from buffers 116 from multiple graphics surfaces. Display processor 114 can then overlay the rendered graphics surfaces onto a graphics frame in a frame buffer 160 that is to be displayed on display device 106. Frame buffer 160 may be dedicated memory within graphics processing system 102. In one aspect, frame buffer 160, however, may comprise system RAM (random access memory) directly within memory 104, as is shown in FIG. 1B.

In one aspect, the graphics frame includes at least one on-screen surface, such as a window surface. The level at which each graphics surface is overlaid is determined by a surface level defined for the graphics surface. This surface level may be defined by a user program, such as by application instructions 118. The surface level may be stored as a parameter associated with a rendered surface.

The surface level may be defined as any number, wherein the higher the number the higher on the displayed graphics frame the surface will be displayed. That is, in situations where portions of two surfaces overlap, the overlapping portions of a surface with a higher surface level will be displayed instead of the overlapping portions any surface with a lower surface level. As a simple example, the background image used on a desktop computer would have a lower surface level than the icons on the desktop. The surface levels may, in some cases, be combined with transparency information so that two surfaces that overlap may be blended together. In these cases, color keying may be used. If a pixel in a first surface does not match a key color, then the first surface can be chosen as the output pixel if alpha (transparency) blending is not enabled. If alpha blending is enabled, the pixels of the first and a second surface may be blended as usual. If the pixel of the first surface does match the key color, the pixel of the second surface is chosen and no alpha blending is performed.

In one aspect, control processor 108 may be an Advanced RISC (reduced instruction set computer) Machine (ARM) processor, such as the ARM₁₁ processor embedded in Mobile Station Modems designed by Qualcomm, Inc. of San Diego, CA. In one aspect, display processor 114 may be a mobile display processor (MDP) also embedded in Mobile Station Modems designed by Qualcomm, Inc. Any of processors 108, 110, and 114 are capable of accessing buffers 116A-116N within buffer areas 112. In one aspect, each processor 108, 110, and 114 is capable of providing rendering capabilities and writing rendered output data for graphics surfaces into buffers 116A-116N.

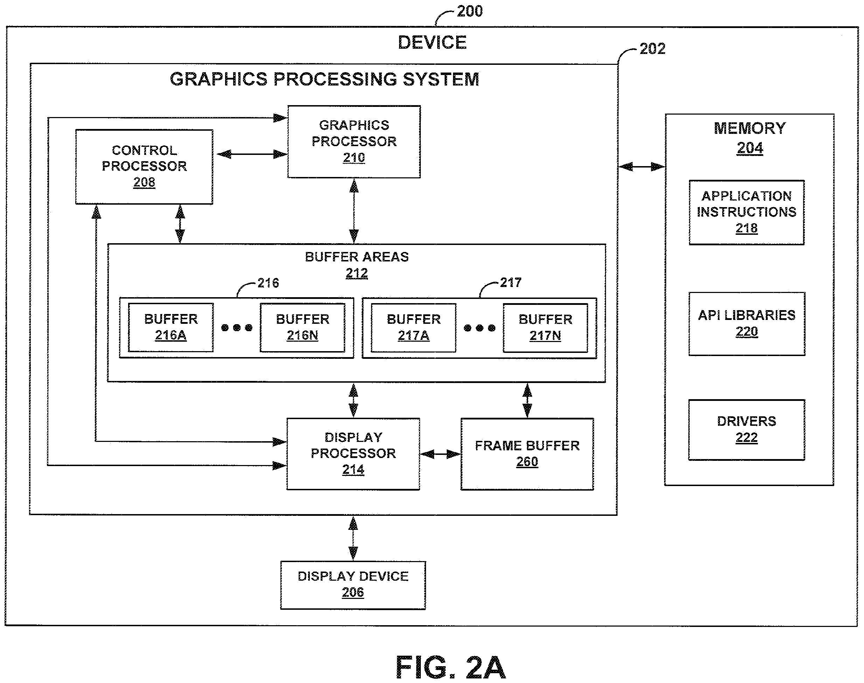

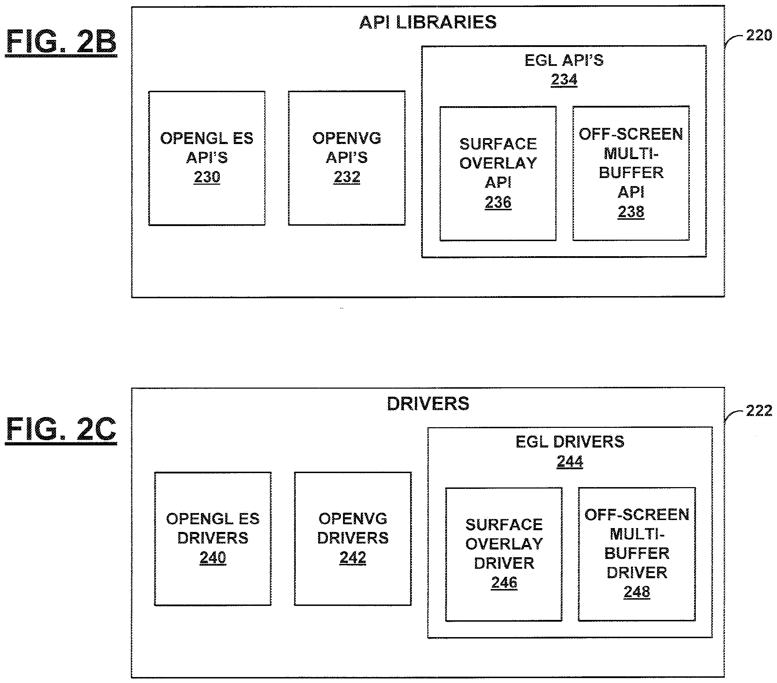

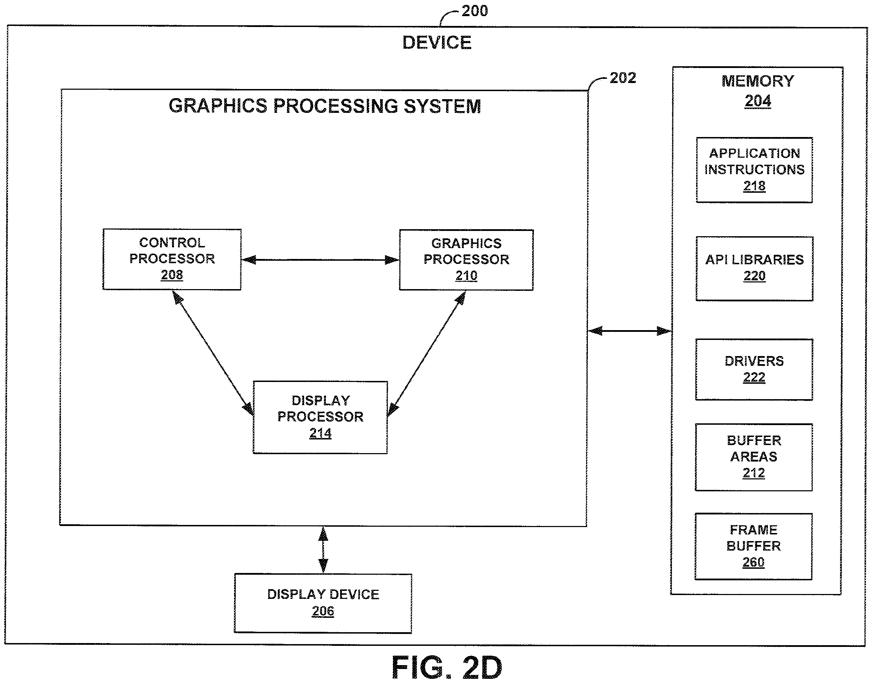

FIG. 2A is a block diagram illustrating a device 200 that may be used to implement multi-buffer support for off-screen surfaces, according to one aspect of the disclosure. In this aspect, device 200 shown in FIG. 2A is an example instantiation of device 100 shown in FIG. 1A. Device 200 includes a graphics processing system 202, memory 204, and a display device 206. Similar to memory 104 shown in FIG. 1A, memory 204 of FIG. 2 includes storage space for application instructions 218, API libraries 220, and drivers 222. Similar to graphics processing system 102 shown in FIG. 1A, graphics processing system 202 of FIG. 2 includes a processor 208, a graphics processor 210, a display processor 214, a buffer areas 212, and a frame buffer 260. Processor 208 may be a control, or general-purpose, processor. In one aspect, processor 208 may comprise a system CPU (central processing unit).

In one aspect, buffer areas 212 may be included within memory 204, as shown in FIG. 2D. Frame buffer 260 may be dedicated memory within graphics processing system 202. In one aspect, frame buffer 260, however, may comprise system RAM (random access memory) directly within memory 204, as shown in FIG. 2D.

In the example of FIG. 2A, buffer areas 212 includes a plurality of buffers 216A-216N (collectively, 216) used for pbuffer surfaces and another plurality of buffers 217A-217N (collectively, 217) used for pixmap surfaces. Buffers 216A-216N are associated with an off-screen pbuffer surface, and buffers 217A-217N are associated with an off-screen pixmap surface. As noted previously, pbuffers and pixmaps are examples of off-screen surfaces. Thus, an individual off-screen pbuffer surface is associated with multiple buffers 216A-216N, such that rendering data for the pbuffer surface may be stored and processed from buffers 216A-216N. An individual off-screen pixmap surface is associated with multiple buffers 217A-217N. As noted above, pbuffers are off-screen memory buffers that may be stored, for example, in memory space associated with OpenGL server-side (driver internal) operations. Pixmaps are off-screen memory areas that may be commonly stored, for example, in memory space associated with a client application. In one aspect, buffers 216 and buffers 217 may be completely distinct buffer spaces.

Each individual puffer 216A-216N may be identified as a read buffer, a write buffer, or both. Similarly, each individual buffer 217A-217N may be identified as a read buffer, a write buffer, or both. In one aspect, control processor 208, graphics processor 210, and/or display processor 214 may be capable of allocating buffers 216A-216N and buffers 217A-217N within buffer areas 212, and identifying which ones of these buffers are read buffers, write buffers, or both.

In one aspect, graphics processor 210 may render an off-screen pbuffer surface and write the rendered surface data to a buffer that has been identified as a write buffer, such as buffer 216A. After rendering is complete, graphics processor 210 may re-identify buffer 216A as a read buffer, and identify a separate buffer, such as buffer 216N, as a write buffer. The graphics processor 210 may then write new, or updated, rendered surface data to buffer 216N while it or display processor 214 reads the prior rendered surface data from buffer 216A. Graphics processor 210 may read the prior rendered surface data from buffer 216A as a texture source for further graphics processing, or display processor 214 may read the rendered surface data from buffer 216A for eventual display on display device 206. By utilizing multiple buffers 216A-216N for one off-screen pbuffer surface, read and write operations are able to be performed for off-screen pbuffer surfaces in parallel.

Similarly, in one aspect, graphics processor 210 or control processor 208 may render an off-screen pixmap surface and write the rendered surface data to a buffer that has been identified as a write buffer, such as buffer 217A. After rendering is complete, graphics processor 210 or control processor 208 may re-identify buffer 217A as a read buffer, and identify a separate buffer, such as buffer 217N, as a write buffer. The graphics processor 210 or control processor 208 may then write new, or updated, rendered surface data to buffer 217N while they or display processor 214 reads the prior rendered surface data from buffer 217A. By utilizing multiple buffers 217A-217N for one off-screen pixmap surface, read and write operations are able to be performed in parallel. Pixmap surfaces are often more likely to include pre-rendered content and may often be read from a file.

FIG. 2B is a block diagram illustrating further details of API libraries 220 shown in FIG. 2A, according to one aspect of the disclosure. As described previously with reference to FIG. 2A, API libraries 220 may be stored in memory 204 and linked, or referenced, by application instructions 218 during application execution by graphics processor 210, control processor 208, and/or display processor 214. FIG. 2C is a block diagram illustrating further details of drivers 222 shown in FIG. 2A, according to one aspect. Drivers 222 may be stored in memory 204 and linked, or referenced, by application instructions 218 and/or API libraries 220 during application execution by graphics processor 210, control processor 208, and/or display processor 214.

In FIG. 2B, API libraries 220 includes OpenGL ES API's 230, OpenVG API's 232, and EGL API's 234. Drivers 222, shown in FIG. 2C, includes OpenGL ES drivers 240, OpenVG drivers 242, and EGL drivers 244. OpenGL ES API's 230 are API's invoked by application instructions 218 during application execution by graphics processing system 202 to provide functions supported by OpenGL ES, such as 2D and 3D graphics functions. OpenGL ES drivers 240 are invoked by application instructions 218 and/or OpenGL ES API's 230 during application execution for low-level driver support of OpenGL ES functions in graphics processing system 202.

OpenVG API's 232 are API's invoked by application instructions 218 during application execution to provide functions supported by OpenVG, such as 2D vector graphics functions. OpenVG drivers 242 are invoked by application instructions 218 and/or OpenVG API's 232 during application execution for low-level driver support of OpenVG functions in graphics processing system 202.

EGL API's 234 (FIG. 2B) and EGL drivers 244 (FIG. 2C) provide support for EGL functions in graphics processing system 202. In one aspect, EGL extensions may be incorporated within EGL API's 234 and EGL drivers 244. In the examples of FIGS. 2B-2C, EGL extensions for surface overlay and off-screen multi-buffer functionality are provided. Thus, for the EGL surface overlay extension, a surface overlay API 236 is included within EGL API's 234 and a surface overlay driver 246 is included within EGL drivers 244. Likewise, for the EGL off-screen multi-buffer extension, an off-screen multi-buffer API 238 is included within EGL API's 234 and an off-screen multi-buffer driver 248 is included within EGL drivers 244.

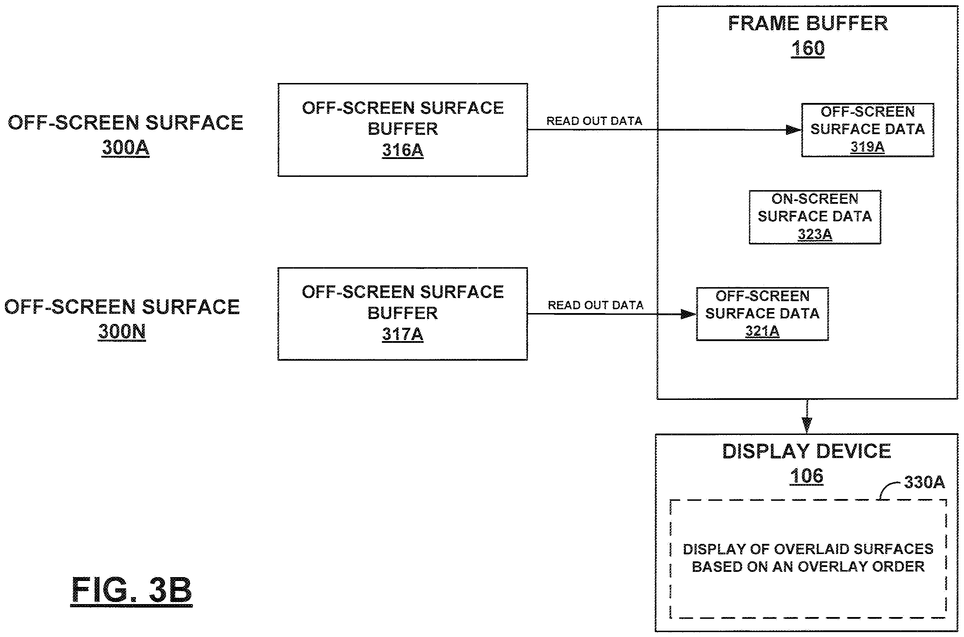

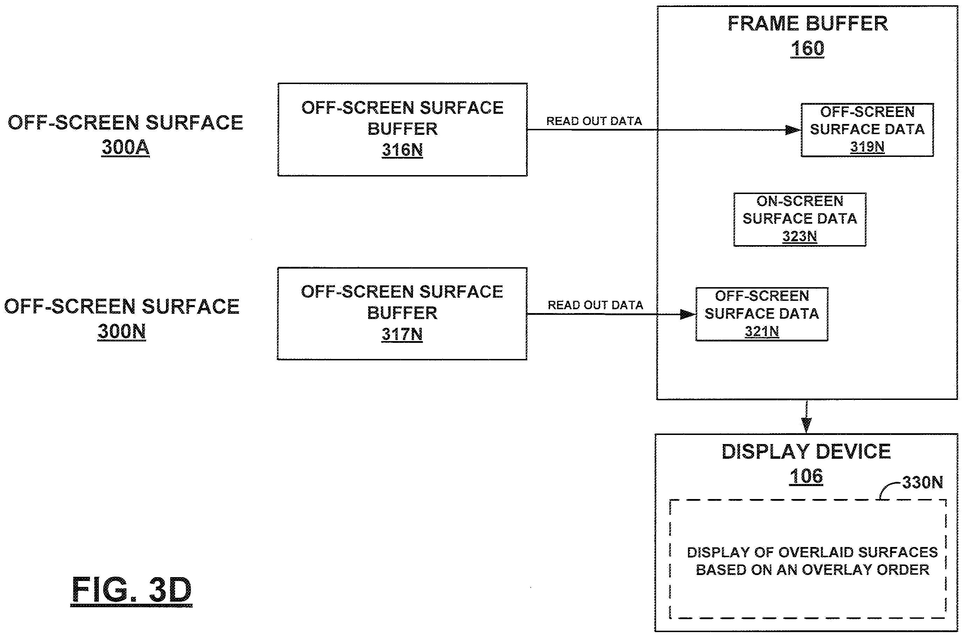

The EGL surface overlay extension provides a surface overlay stack for overlay of multiple graphics surfaces (such as 2D surfaces, 3D surfaces, and/or video surfaces) that are displayed on display device 206. The graphics surfaces, which may include both on-screen and off-screen surfaces, each have an associated surface level within the stack. The overlay of surfaces is thereby achieved according to an overlay order of the surfaces within the stack. Examples of surface overlays are shown in FIGS. 3B and 3D and will be discussed in more detail below. In one aspect, the overlay stack includes at least one on-screen surface, such as a window surface.

The EGL off-screen multi-buffer extension provides support for a defined number of buffers that are associated with each off-screen surface processed by graphics processing system 202, such as a pbuffer surface or a pixmap surface. For example, as shown in FIG. 2A, multiple buffers 216A-216N may be allocated and associated with a pbuffer surface, and multiple buffers 217A-217N may be allocated and associated with a single pixmap surface. In addition, the EGL off-screen multi-buffer extension allows each buffer to be identified as a read buffer, a write buffer, or both, as described previously in reference to FIG. 2A.

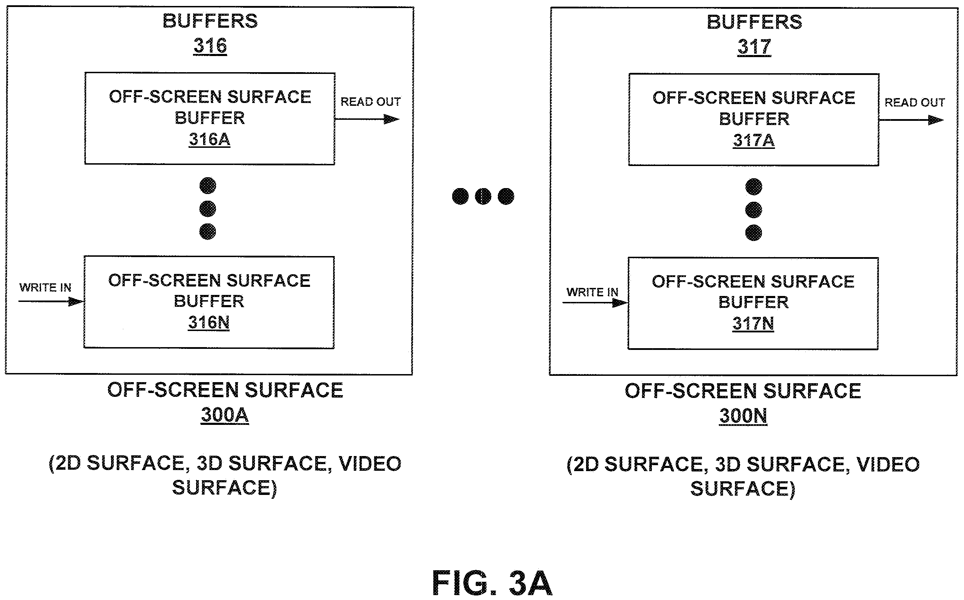

FIG. 3A is a block diagram illustrating an example of multiple off-screen surfaces 300A-300N in which each off-screen surface is associated with multiple buffers, according to one aspect. In the example of FIG. 3A, each off-screen surface 300A-300N is a surface that may be processed by graphics processing system 102 and ultimately displayed on display device 106, shown in FIG. 1A or FIG. 1B. These surfaces 300A-300N may also be processed by graphics processing system 202 shown in FIG. 2A or FIG. 2D. However, for purposes of illustration only in the following description of FIGS. 3A-3D, it will be assumed that surfaces 300A-300N are processed by graphics processing system 102.

Each off-screen surface 300A-300N may comprise a 2D surface, a 3D surface, or a video surface. Within each frame of data captured within frame buffer 160 and displayed on display device 106, off-screen surfaces 300A-300N may be overlaid according to an overlay order. An example of this is shown in FIG. 3B. In such fashion, 2D surfaces, 3D surfaces, and/or video surfaces may be overlaid in a surface overlay stack and displayed together on display device 106. For example, in video game applications, surfaces related to certain game-playing surfaces may be overlaid with others. In some cases, still image data may be overlaid with video data in an overlay stack in such applications, where the still image data may comprise background graphics and the video data may comprise data for moving objects, scores, and the like. In one aspect, the overlay stack includes at least one on-screen surface, such as a window surface.

Off-screen surface 300A is associated with buffers 316 that have been allocated within buffer areas 112 of graphics processing system 102, according to one aspect. Buffers 316 includes a plurality of off-screen surface buffers 316A-316N. Each buffer 316A-316N may be identified as a read buffer, a write buffer, or both, and each buffer 316A-316N is capable of holding data, such as rendering data, that is associated with off-screen surface 300A.

In the example of FIG. 3A, buffer 316A has been identified as a read buffer, and buffer 316N has been identified as a write buffer. As such, data may be read out of buffer 316A while other data is concurrently being written into buffer 316N. For example, graphics processor 110 may be in the process of rendering new or updated surface data for surface 300A into buffer 316N. While this is occurring, graphics processor 110, display processor 114, or control processor 108 may read previously rendered surface data for surface 300A out of buffer 316A. Because these types of read and write operations may occur in parallel, rendering and display processes for off-screen surface 300A can occur concurrently within graphics processing system 102.

Off-screen surface 300N is associated with buffers 317 that have been allocated within buffer areas 112 of graphics processing system 102, according to one aspect. Buffers 317 includes a plurality of off-screen surface buffers 317A-317N. Each buffer 317A-317N may be identified as a read buffer, a write buffer, or both, and each buffer 317A-317N is capable of holding data, such as rendering data, that is associated with off-screen surface 300N.

In the example of FIG. 3A, buffer 317A has been identified as a read buffer, and buffer 317N has been identified as a write buffer. As such, data associated with surface 300N may be read out of buffer 317A while other data associated with surface 300N is concurrently being written into buffer 317N. For example, graphics processor 110 may be in the process of rendering new or updated surface data for surface 300N into buffer 317N. While this is occurring, graphics processor 110, display processor 114, or control processor 108 may read previously rendered surface data for surface 300N out of buffer 317A. Because these types of read and write operations may occur in parallel, rendering and display processes for off-screen surface 300N can occur concurrently within graphics processing system 102.

FIG. 3B is a block diagram illustrating an example of overlaid surface data associated with off-screen surfaces 300A and 300N as shown in FIG. 3A that may be displayed on display device 106 along with an on-screen surface, according to one aspect. As just described above in reference to FIG. 3A, off-screen surface buffer 316A was identified within buffers 316 as a read buffer associated with off-screen surface 300A, and off-screen surface buffer 317A was identified within buffers 317 as a read buffer associated with off-screen surface 300N. Thus, surface data (such as rendered surface output data) for off-screen surface 300A may be read out of buffer 316A, and surface data for off-screen surface 300N may be read out of buffer 317A.

In the example of FIG. 3B, it is assumed that display processor 114 reads surface data for off-screen surface 300A out of buffer 316A and stores such data as off-screen surface data 319A within frame buffer 160 of graphics processing system 102. Display processor 114 also reads surface data for an on-screen surface, such as a window surface, out of a buffer (not shown) and stores such data as on-screen surface data 323A within frame buffer 160. In addition, display processor 114 may read surface data for off-screen surface 300N out of buffer 317A and store such data as off-screen surface data 321A within frame buffer 160. In this manner, off-screen surface data 319A and 321A, along with on-screen surface data 323A, may be included within one frame of image data to be displayed on display device 106.

In one aspect, off-screen surface data 319A and 321A, along with on-screen surface data 323A, may be included within a surface overlay stack. In this aspect, display processor 114 may associate each of surface data 319A, 321A, and 323A with a distinct surface level within the stack, thereby implementing an overlay order for off-screen surface data 319A and 321A and on-screen surface data 323A. Off-screen surface data 319A is associated with one frame of surface data for off-screen surface 300A, and off-screen surface data 321A is associated with one frame of surface data for off-screen surface 300N.

In one aspect, the levels of surfaces 300A and 300N, or the sequence in which they are bound to a particular level, may both be taken into account during the surface overlay process. In certain cases, multiple surfaces may be bound to a particular layer. Layers may be processed by from back to front (most negative to most positive). Within a given layer, surfaces are processed in the sequence which they were bound to the layer.

As is shown in FIG. 3B, off-screen surface data 319A and 321A may be displayed, along with on-screen surface data 323A, on display device 106 within a screen area 330A that is visible to a user. Off-screen surface data 319A and 321A, along with on-screen surface data 323A, may be displayed within screen area 330A as overlaid surfaces based upon the overlay order used by display processor 114. Off-screen surface data 319A and 321A may or may not be displayed with the same position or relationship as included within frame buffer 160. A surface overlay stack may be used to assign any surface overlay levels for display of the surfaces on display device 106. As a result, graphics processing system 102 is capable of providing 2D, 3D, and/or video surface data that may be overlaid for display to a user on display device 106. For example, if off-screen surface 300A is a 3D surface in the example of FIG. 3B, and off-screen surface 300N is a video surface, 3D and video surface data associated with these surfaces may be displayed on display device 106. Any combination of 2D, 3D, and/or video surface data may be overlaid on display device 106.

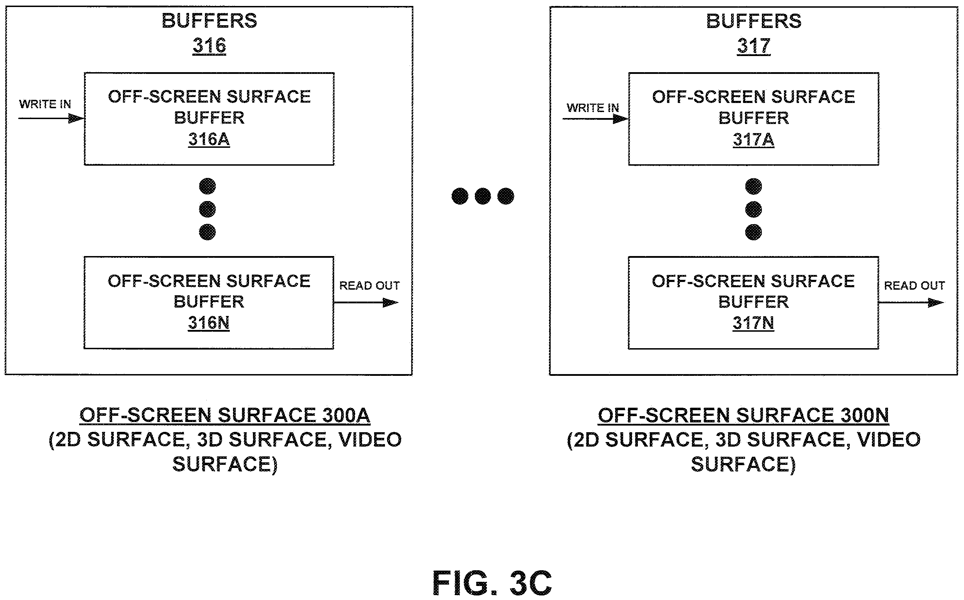

FIG. 3C is a block diagram illustrating an example of multiple off-screen surfaces 300A-300N having different identified read and write buffers, according to one aspect. In FIG. 3C, contrary to the example shown in FIG. 3A, off-screen surface buffer 316A has been identified as the write buffer for off-screen surface 300A, and off-screen surface buffer 316N has been identified as the read buffer. Also, with respect to off-screen surface 300N, off-screen surface buffer 317A has been identified as the write buffer, and off-screen surface buffer 317N has been identified as the read buffer.

In one aspect, one or more of control processor 108, graphics processor 110, and/or display processor 114 may allocate buffer space within buffers 316 and/or 317, and also identify which buffers 316A-316N and 317A-317N are read buffers, write buffers, or both, with respect to off-screen surfaces 300A-300N. The examples of FIGS. 3A and 3C show that any given buffer may be identified as a read buffer at a given point in time, but may later be identified as a write buffer, similar to the implementation of window surface double buffering but applied to off-screen surfaces.

For example, in FIG. 3A, off-screen surface buffer 316N is identified as a write buffer. Thus, rendering output data for off-screen surface 300A may be written, such as by graphics processor 110, to buffer 316N during the rendering process. Because buffer 316A of FIG. 3A is identified as a read buffer, surface data (such as, for example, prior rendered data) for off-screen surface 300A may be read out of buffer 316A while separate data is being written to buffer 316N in parallel.

When, for example, graphics processor 110 has finished rendering and writing data to buffer 316N, buffer 316N may be re-identified as a read buffer, as is shown in FIG. 3C, such that this rendered data for off-screen surface 300A may be read out of buffer 316N. Likewise, buffer 316A may be re-identified as a write buffer, as shown in FIG. 3C, such that new rendered output data for off-screen surface 300A may be written into buffer 316A while separate data is being read from buffer 316N in parallel. Thus, in certain scenarios, one or more of buffers 316A-316N may switch between being identified as a read buffer and a write buffer at different points in time.

Similarly, one or more of buffers 317A-317N may switch between being identified as a read buffer and a write buffer at different points in time. In FIG. 3A, buffer 317A is identified as a read buffer, and buffer 317N is identified as a write buffer. However, as shown in FIG. 3C, buffer 317A has been re-identified as a write buffer, and buffer 317N has been re-identified as read buffer.

FIG. 3D is a block diagram illustrating an example of overlaid surface data associated with off-screen surfaces 300A and 300N as shown in FIG. 3C that may be displayed, along with an on-screen surface, on display device 106, according to one aspect. Because off-screen surface buffer 316N is identified as a read buffer for off-screen surface 300A, display processor 114 may read data from buffer 316N and store such data as off-screen surface data 319N within frame buffer 160. Display processor 114 may also read data from buffer 317N, which is associated with off-screen surface 300N, and store such data as off-screen surface data 321N within frame buffer 160. In this manner, off-screen surface data 319N and 321N, along with on-screen surface data 323N, may be included within one frame of image data to be displayed on display device 106.

Similar to the example of FIG. 3B, off-screen surface data 319N and 321N shown in FIG. 3D, along with on-screen surface data 323N, may be included within a surface overlay stack that provides an ordering for surfaces that are to be overlaid. Display processor 114 may associate each of surface data 319N, 321N, and 323N with a distinct surface level within the stack, thereby implementing an overlay order for off-screen surface data 319N and 321N and on-screen surface data 323N. Off-screen surface data 319N and 321N, along with on-screen surface data 323N, may then be displayed on display device 106 within a screen area 330N that is visible to a user. Surface data 319N, 321N, and 323N may be displayed within screen area 330N as overlaid surfaces based upon the overlay order used by display processor 114.

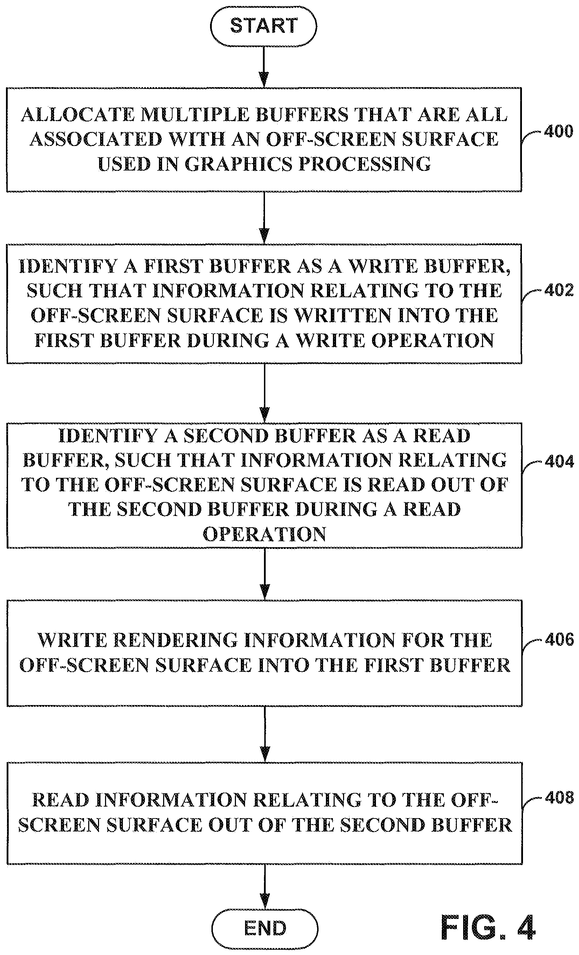

FIG. 4 is a flow diagram of a method that may be performed by one or more of control processor 108, graphics processor 110, and/or display processor 114 shown in graphics processing system 102 of FIG. 1A or FIG. 1B, or by one or more of control processor 208, graphics processor 210, and/or display processor 214 shown graphics processing system 202 of FIG. 2A or FIG. 2D, according to one aspect. For purposes of illustration only in the description below, it will be assumed that the method shown in FIG. 4 is performed by one or more processors in graphics processing system 102.

Initially, one or more of control processor 108, graphics processor 110, and/or display processor 114 allocates multiple buffers, such as buffers 116A-116N, that are all associated with an off-screen surface used in graphics processing (400 in FIG. 4). The buffers 116A-116N may be allocated within buffer areas 112, and may comprise a defined number of buffers. The off-screen surface may comprise a pbuffer or a pixmap surface. In one aspect, the buffers may be allocated within either a first area of buffer areas 112 or within a second area of buffer areas 112. In some cases, the first area may be associated with pbuffers, and the second area may be associated with pixmaps, wherein the first and second areas are different areas.

A first buffer within buffers 116A-116N is identified as a write buffer (402 in FIG. 4). Information relating to the off-screen surface, such as rendering data, may be written into the first buffer during a write operation. A second buffer within buffers 116A-116N is identified as a read buffer (404 in FIG. 4). Information relating to the off-screen surface may be read out of the second buffer during a read operation. In one aspect, the first buffer and the second buffer are different buffers, such that the write buffer is different from the read buffer.

At 406, the one or more processors, such as graphics processor 110 or control processor 108, may generate rendering information by rendering the off-screen surface and writing the rendering information into the first buffer during the write operation. At 408, the one or more processors, such as display processor 114, may read information relating to the off-screen surface out of the second buffer for display purposes during the read operation. In such fashion, multiple buffers may be provided for the off-screen surface, according to one aspect. In this aspect, a buffer selection function (such as, for example, the *eglBufferMakeCurrentQUALCOMM* function described in more detail below) may be invoked to identify associated buffers as read buffers and/or write buffers. For example, when rendering of the off-screen surface has completed during a given phase, and rendering information has been written to a first buffer, the buffer selection function may be invoked to identify the first buffer as the read buffer, such that the rendering information may be read and the off-screen surface composited within a frame of an image or video that is to be displayed, for example. Invocation of the buffer selection function may also identify the second buffer as the write buffer, such that new rendering information for the off-screen surface may be written to this buffer.

In this manner, one or more of control processor 108, graphics processor 110, and/or display processor 114 may concurrently read surface data from the second (read) buffer while writing new, or updated, surface data to the first (write) buffer with respect to an off-screen surface. Multi-buffer support for off-screen surfaces is thereby provided. Surface data associated with multiple surfaces (each surface having multi-buffer support) may be read out of buffer areas 112 by display processor 114 into a surface overlay stack and provided for display on display device 106 according to an overlay order, in one aspect. These surfaces may comprise 2D surfaces, 3D surfaces, and/or video surfaces.

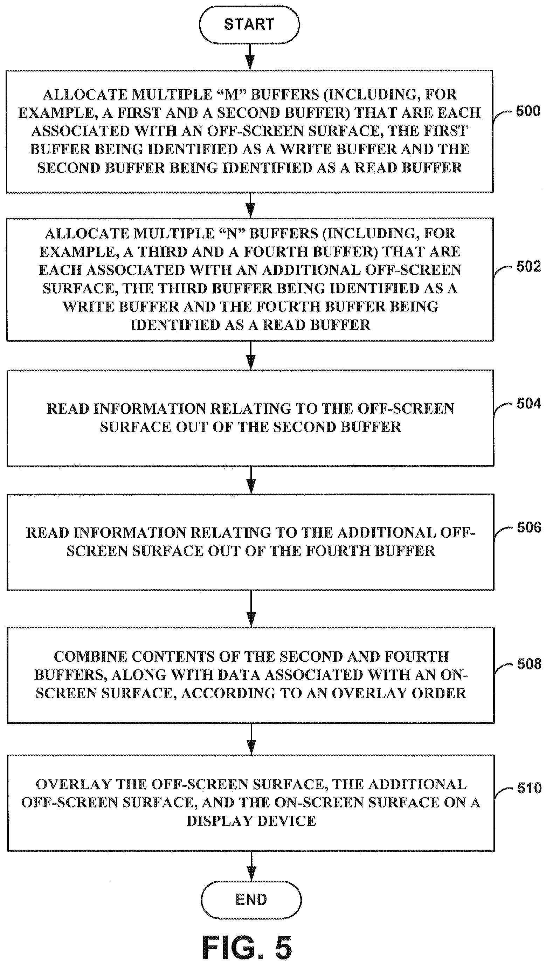

FIG. 5 is a flow diagram of a method that may be performed by one or more of control processor 108, graphics processor 110, and/or display processor 114 shown in graphics processing system 102 of FIG. 1A or FIG. 1B, or by one or more of control processor 208, graphics processor 210, and/or display processor 214 shown graphics processing system 202 of FIG. 2A or FIG. 2D, according to one aspect. For purposes of illustration only in the description below, it will be assumed that the method shown in FIG. 5 is performed by one or more processors in graphics processing system 102.

Initially, at 500, one or more of control processor 108, graphics processor 110, and/or display processor 114 allocates multiple "M" buffers that are each associated with an off-screen surface, where M is greater than or equal to two. For example, the M buffers may include a first buffer and a second buffer (for illustration purposes only). The first buffer is identified as a write buffer for the off-screen surface, such that information relating to the off-screen surface may be written into the first buffer during a write operation. The second buffer is identified as a read buffer for the off-screen surface, such that information relating to the off-screen surface may be read out of the second buffer during a read operation.

At 502, the one or more processors allocate multiple "N" buffers that are each associated with an additional off-screen surface, where N is greater than or equal to two. For example, the N buffers may include a third and a fourth buffer (for illustration purposes only). The third buffer is identified as a write buffer for the additional off-screen surface, such that information relating to the additional off-screen surface may be written into the third buffer during an additional write operation. The fourth buffer is identified as a read buffer for the additional off-screen surface, such that information relating to the additional off-screen surface may be read out of the fourth buffer during an additional read operation.

At 504, the one or more processors, such as display processor 114, reads information relating to the off-screen surface out of the second buffer. At 506, the one or more processors, such as display processor 114, reads information relating to the additional off-screen surface out of the fourth buffer.

At 508, the one or more processors may combine contents of the second buffer (associated with the off-screen surface) and the fourth buffer (associated with the additional off-screen surface) along with data associated with an on-screen surface, according to an overlay order. For example, this information may be combined within a surface overlay stack.

At 510, the one or more processors may overlay the off-screen surface and the additional off-screen surface, along with the on-screen surface, on a display device, such as display device 106. The surface may be overlaid according to the overlay order.

As discussed previously, multi-buffer support for off-screen surfaces may be implemented by one or more processors within system 102 and/or system 202 (FIG. 2A). In one aspect, functionality to implement multi-buffer support for off-screen surfaces, when executed by one or more processors, may be included within API libraries 120 and/or drivers 122, or within API libraries 220 and/or drivers 222 (FIG. 2A). For example, such functionality may be included within off-screen multi-buffer API 238 (FIG. 2B) and/or within off-screen multi-buffer driver 248 (FIG. 2C). In one aspect, this functionality may be provided as part of an EGL extension. For purposes of illustration only in the description below, it will be assumed that such functionality is provided as part of an EGL extension (i.e., an extension to the EGL specification).

In one aspect, an EGL extension is provided for multi-buffer support of off-screen surfaces. Within EGL code, at surface creation time, the attribute list passed to *eglCreatePbufferSurface* or *eglCreatePixmapSurface* can now contain the *EGL_BACK_BUFFER* token followed by an *EGLint* indicating the total number of buffers that should be associated with that off-screen surface. For example, in the case of a pixmap off-screen surface, if the number of specified buffers is greater than one, the *pixmap* parameter may be treated as a *NULL* terminated array of pointers to *NativePixmapTypes* to use for each buffer in the pixmap surface, in one case.

In one aspect, each off-screen surface is associated with a draw (write) buffer and also a read buffer. As such, the EGLSurface structure may be modified to contain a *draw_current* parameter and a *read_current* parameter. The value of the *draw_current* parameter specifies the current draw buffer, and the value of the *read_current* parameter specifies the current read buffer. Both *draw*_*current* and *read_current* may be of type *EGLint*.

A function *eglBufferMakeCurrentQUALCOMM* can be used to Set *draw*_*current* and *read_current* for a multi-buffered surface. An example function declaration of *eglBufferMakeCurrentQUALCOMM* is shown below:

```
 EGLBoolean eglBufferMakeCurrentQUALCOMM(EGLDisplay dpy,
                                       EGLSurface suf,
                                       EGLint draw_idx,
                                       EGLint read_idx);
```

Example EGL code for an EGL extension that provides multi-buffer support for an off-screen surface, according to one aspect, is shown below for illustration purposes only. This example code makes use of the *eglBufferMakeCurrentQUALCOMM* function.

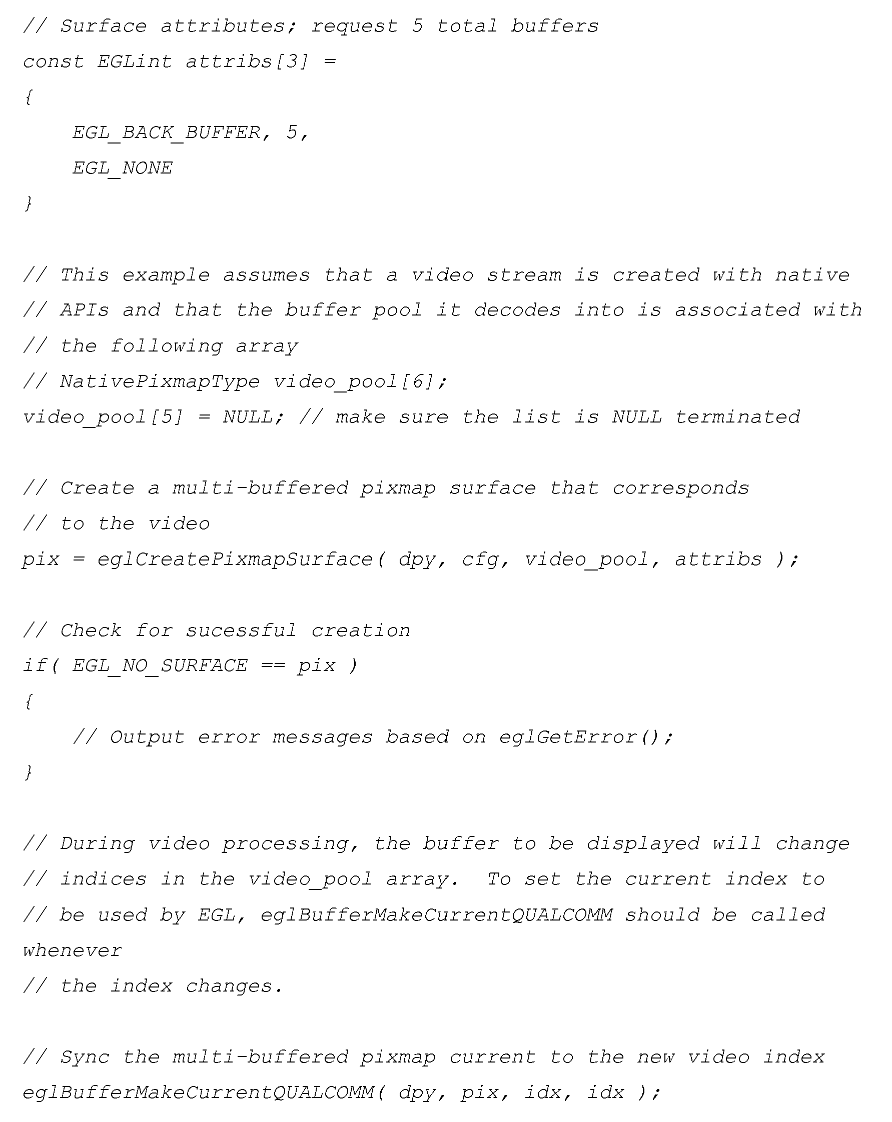

In this example EGL code, the off-screen surface attributes are initialized to request five total buffers that are to be allocated and associated with the surface, as the existing *EGL_BACK_BUFFER* token is followed by an *EGLint* value of five. The example code assumes that a video stream has already been created with native API's, and provides a null-terminated array for the *video_pool* list. The code then creates a multi-buffered pixmap surface that corresponds to the video using the *eglCreatePixmapSurface* function call as provided in the EGL specification.

During video processing, the read buffer (or buffer to be displayed) may change indices within the video_pool list. To set the current index to be used by EGL, *eglBufferMakeCurrentQUALCOMM* can be invoked whenever the index changes, and to set the current draw (write) and read buffers. In the example code, both the current write and read buffers are set with the same index, idx, which is the new video index. Although, in this example, the identified write and read buffers are the same buffer, this certainly is not always the case. In many situations, the identified write and read buffers will be different buffers, as shown in the examples of FIGS. 3A-3D.

The techniques described in this disclosure may be implemented within a general purpose microprocessor, digital signal processor (DSP), application specific integrated circuit (ASIC), field programmable gate array (FPGA), or other equivalent logic devices. Accordingly, the terms "processor" or "controller," as used herein, may refer to any of the foregoing structures or any other structure suitable for implementation of the techniques described herein.

The various components illustrated in FIGS. 1-4 may be realized by any suitable combination of hardware and/or software. In FIGS. 1-4, various components are depicted as separate units or modules. However, all or several of the various components described with reference to FIGS. 1A-4 may be integrated into combined units or modules within common hardware and/or software. Accordingly, the representation of features as components, units or modules is intended to highlight particular functional features for ease of illustration, and does not necessarily require realization of such features by separate hardware or software components. In some cases, various units may be implemented as programmable processes performed by one or more processors

The components and techniques described herein may be implemented in hardware, software, firmware, or any combination thereof. Any features described as modules or components may be implemented together in an integrated logic device or separately as discrete but interoperable logic devices. In various aspects, such components may be formed at least in part as one or more integrated circuit devices, which may be referred to collectively as an integrated circuit device, such as an integrated circuit chip or chipset. Such circuitry may be provided in a single integrated circuit chip device or in multiple, interoperable integrated circuit chip devices, and may be used in any of a variety of image, display, audio, or other multi-media applications and devices. In some aspects, for example, such components may form part of a mobile device, such as a wireless communication device handset.

If implemented in software, the techniques may be realized at least in part by a computer-readable medium comprising code with instructions that, when executed by one or more processors, performs one or more of the methods described above. The computer-readable medium may form part of a computer program product, which may include packaging materials. The computer-readable medium may comprise random access memory (RAM) such as synchronous dynamic random access memory (SDRAM), read-only memory (ROM), non-volatile random access memory (NVRAM), electrically erasable programmable read-only memory (EEPROM), embedded dynamic random access memory (eDRAM), static random access memory (SRAM), FLASH memory, magnetic or optical data storage media.

The techniques additionally, or alternatively, may be realized at least in part by a computer-readable communication medium that carries or communicates code in the form of instructions or data structures and that can be accessed, read, and/or executed by one or more processors. Any connection may be properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Combinations of the above should also be included within the scope of computer-readable media. Any software that is utilized may be executed by one or more processors, such as one or more DSP's, general purpose microprocessors, ASIC's, FPGA's, or other equivalent integrated or discrete logic circuitry.

## Claims

1. A method comprising:
allocating a group of at least three buffers any of which may comprise a read buffer, a write buffer, or both a read and write buffer to store rendering data associated with an off-screen surface that is to be displayed after subsequent processing in a graphics system;
identifying a first buffer within the group of buffers as a write buffer for the off-screen surface, such that rendering data associated with the off-screen surface is written into the first buffer during a write operation; and
identifying a second buffer within the group of buffers as a read buffer for the off-screen surface, such that rendering data associated with the off-screen surface is read out of the second buffer during a read operation.

2. The method of claim 1, wherein allocating the group of buffers comprises allocating the group of buffers within one or more buffer areas of the graphics system.

3. The method of claim 2, wherein allocating the group of buffers within the one or more buffer areas of the graphics system comprises allocating the group of buffers within either a first area of the one or more buffer areas associated with pbuffers or within a second area of the one or more buffer areas associated with pixmaps.

4. The method of claim 1, further comprising:
invoking a buffer selection function that identifies the first buffer as the read buffer and the second buffer as the write buffer.

5. The method of claim 1, further comprising:
generating rendering information by rendering the off-screen surface; and
writing the rendering information into the first buffer during the write operation.

6. The method of claim 1, further comprising:
reading information relating to the off-screen surface out of the second buffer during the read operation.

7. The method of claim 1, wherein the first buffer and the second buffer are different buffers, such that the write buffer is different from the read buffer.

8. The method of claim 1, further comprising:
allocating additional buffers that are all associated with an additional off-screen surface used in graphics processing;
identifying a third buffer within the additional buffers as a write buffer for the additional off-screen surface, such that rendering data associated with the additional off-screen surface is written into the third buffer during an additional write operation; and
identifying a fourth buffer within the additional buffers as a read buffer for the additional off-screen surface, such that rendering data associated with the additional off-screen surface is read out of the fourth buffer during an additional read operation.

9. The method of claim 8, further comprising:
combining contents of the second buffer for the off-screen surface, contents of the fourth buffer for the additional off-screen surface, and data associated with an on-screen surface according to an overlay order; and
overlaying the off-screen surface, the additional off-screen surface, and the on-screen surface for display purposes based upon the overlay order.

10. The method of claim 9, wherein:
the off-screen surface comprises a two-dimensional surface, a three-dimensional surface, or a video surface; and
the additional off-screen surface comprises a two-dimensional surface, a three-dimensional surface, or a video surface.

11. A computer-readable medium comprising instructions for causing one or more programmable processors to carry out the steps of any of claims 1 to 10.

12. A device comprising:
means for allocating a group of at least three buffers any of which may comprise a read buffer, a write buffer, or both a read and write buffer to store rendering data associated with an off-screen surface that is to be displayed after subsequent processing in a graphics system;
means for identifying a first buffer within the group of buffers as a write buffer for the off-screen surface, such that rendering data associated with the off-screen surface is written into the first buffer during a write operation; and
means for identifying a second buffer within the group of buffers as a read buffer for the off-screen surface, such that rendering data associated with the off-screen surface is read out of the second buffer during a read operation.

13. The device of claim 12, further comprising one or more buffer areas, wherein the means for allocating the group of buffers, the means for identifying a first buffer, and the means for identifying a second buffer comprise one or more processors configured to allocate the group of buffers within the one or more buffer areas.

14. The device of claim 13, wherein the one or more processors are configured to allocate the group of buffers within either a first area of the one or more buffer areas associated with pbuffers or within a second area of the one or more buffer areas associated with pixmaps.

15. The device of claim 13, wherein the one or more processors are further configured to invoke a buffer selection function that identifies the first buffer as the read buffer and the second buffer as the write buffer.

## Patentansprüche

1. Ein Verfahren, das Folgendes aufweist:
Zuteilen einer Gruppe von wenigstens drei Puffern, von denen jeglicher einen Lesepuffer, einen Schreibpuffer oder einen Lese- und Schreibpuffer aufweisen kann, zum Speichern von Rendering-Daten, die mit einer nicht auf dem Bildschirm angezeigten Oberfläche bzw. einer Off-Screen-Oberfläche assoziiert sind, die nach einer nachfolgenden Verarbeitung in einem Grafiksystem angezeigt werden soll;
Identifizieren eines ersten Puffers innerhalb einer Gruppe von Puffern als einen Schreibpuffer für die Off-Screen-Oberfläche, so dass Rendering-Daten, die mit der Off-Screen-Oberfläche assoziiert sind, in den ersten Puffer während einer Schreiboperation geschrieben werden; und
Identifizieren eines zweiten Puffers innerhalb der Gruppe von Puffern als einen Lesepuffer für die Off-Screen-Oberfläche, so dass Rendering-Daten, die mit der Off-Screen-Oberfläche assoziiert sind, aus dem zweiten Puffer während einer Leseoperation gelesen werden.

2. Verfahren nach Anspruch 1, wobei das Zuteilen der Gruppe von Puffern Zu teilen der Gruppe von Puffern innerhalb eines oder mehrerer Pufferbereiche des Grafiksystems aufweist.

3. Verfahren nach Anspruch 2, wobei das Zuteilen der Gruppe von Puffern innerhalb des einen oder der mehreren Bereiche des Grafiksystems Zuteilen der Gruppe von Puffern innerhalb entweder eines ersten Bereichs der ein oder mehreren Pufferbereiche, die mit pBuffern assoziiert sind, oder innerhalb eines zweiten Bereichs der ein oder mehreren Pufferbereichen, die mit Pixmaps assoziiert sind, aufweist.

4. Verfahren nach Anspruch 1, das weiter Folgendes auf:
Aktivieren einer Pufferauswahlfunktion, die den ersten Puffer als den Lesepuffer und den zweiten Puffer als den Schreibpuffer identifiziert.

5. Verfahren nach Anspruch 1, das weiter Folgendes aufweist:
Generieren von Rendering-Information durch Rendern der Off-Screen-Oberfläche; und
Schreiben der Rendering-Information in den ersten Puffer während der Schreiboperation.

6. Verfahren nach Anspruch 1, das weiter Folgendes aufweist:
Lesen von Information, die sich auf die Off-Screen-Oberfläche bezieht, aus dem zweiten Lesepuffer während der Leseoperation.

7. Verfahren nach Anspruch 1, wobei der erste Puffer und der zweite Puffer unterschiedliche Puffer sind, so dass sich der Schreibpuffer von dem Lesepuffer unterscheidet.

8. Verfahren nach Anspruch 1, das weiter Folgendes aufweist:
Zuteilen zusätzlicher Puffer, die alle mit einer zusätzlichen Off-Screen-Oberfläche assoziiert sind, die in der Grafikverarbeitung verwendet wird;
Identifizieren eines dritten Puffers innerhalb des zusätzlichen Puffers als einen Schreibpuffer für die zusätzliche Off-Screen-Oberfläche, so dass Rendering-Daten, die mit der zusätzlichen Off-Screen-Oberfläche assoziiert sind, in den dritten Puffer während einer zusätzlichen Schreiboperation geschrieben werden; und
Identifizieren eines vierten Puffers innerhalb der zusätzlichen Puffer als einen Lesepuffer für die zusätzliche Off-Screen-Oberfläche, so dass Rendering-Daten, die mit der zusätzlichen Off-Screen-Oberfläche assoziiert sind, aus dem vierten Puffer während einer zusätzlichen Leseoperation gelesen werden.

9. Verfahren nach Anspruch 8, das weiter Folgendes aufweist:
Kombinieren von Inhalten des zweiten Puffers für die Off-Screen-Oberfläche, Inhalten des vierten Puffers für die zusätzliche Off-Screen-Oberfläche und
von Daten, die mit einer Oberfläche, die auf dem Bildschirm angezeigt wird, bzw. einer On-Screen-Oberfläche assoziiert sind gemäß einer Overlay- bzw. Überlagerungsreihenfolge; und
Überlagern bzw. Aufbauen der Off-Screen-Oberfläche, der zusätzlichen Off-Screen-Oberfläche und der On-Screen-Oberfläche für Anzeigezwecke basierend auf der Überlagerungsreihenfolge.

10. Verfahren nach Anspruch 9, wobei:
die Off-Screen-Oberfläche eine zweidimensionale Oberfläche, eine dreidimensionale Oberfläche oder eine Videooberfläche aufweist; und
die zusätzliche Off-Screen-Oberfläche eine zweidimensionale Oberfläche, eine dreidimensionale Oberfläche oder eine Videooberfläche aufweist.

11. Ein lesbares Medium, das Instruktionen aufweist, um einen oder mehrere programmierbare Prozessoren zu veranlassen, die Schritte nach einem der Ansprüche 1 bis 10 auszuführen.

12. Eine Einrichtung, die Folgendes aufweist:
Mittel zum Zuteilen einer Gruppe von wenigstens drei Puffern, von denen jeglicher einen Lesepuffer, einen Schreibpuffer oder einen Lese- und Schreibpuffer aufweisen kann, zum Speichern von Rendering-Daten, die mit einer nicht auf dem Bildschirm angezeigten Oberfläche bzw. einer Off-Screen-Oberfläche assoziiert sind, die nach einer nachfolgenden Verarbeitung in einem Grafiksystem angezeigt werden soll;
Mittel zum Identifizieren eines ersten Puffers innerhalb einer Gruppe von Puffern als einen Schreibpuffer für die Off-Screen-Oberfläche, so dass Rendering-Daten, die mit der Off-Screen-Oberfläche assoziiert sind, in den ersten Puffer während einer Schreiboperation geschrieben werden; und
Mittel zum Identifizieren eines zweiten Puffers innerhalb der Gruppe von Puffern als einen Lesepuffer für die Off-Screen-Oberfläche, so dass Rendering-Daten, die mit der Off-Screen-Oberfläche assoziiert sind, aus dem zweiten Puffer während einer Leseoperation gelesen werden.

13. Einrichtung nach Anspruch 12, die ein oder mehrere Pufferbereiche aufweist, wobei die Mittel zum Zuteilen der Gruppe von Puffern, die Mittel zum Identifizieren eines ersten Puffers und die Mittel zum Identifizieren eines zweiten Puffers einen oder mehrere Prozessoren aufweisen, die konfiguriert sind zum Zuteilen der Gruppe von Puffern innerhalb der ein oder mehreren Pufferbereiche.

14. Einrichtung nach Anspruch 13, wobei der eine oder die mehreren Prozessoren konfiguriert sind zum Zuteilen der Gruppe von Puffer innerhalb entweder des ersten Bereichs der ein oder mehreren Pufferbereiche, die mit pBuffern assoziiert sind oder innerhalb eines zweiten Bereichs der ein oder mehreren Pufferbereiche, die mit Pixmaps assoziiert sind.

15. Einrichtung nach Anspruch 13, wobei der eine oder die mehreren Prozessoren weiter konfiguriert sind zum Aktivieren einer Pufferauswahlfunktion, die den ersten Puffer als den Lesepuffer und den zweiten Puffer als den Schreibpuffer identifiziert.

## Revendications

1. Procédé comprenant :
allouer un groupe d'au moins trois tampons dont chacun peut comprendre un tampon de lecture, un tampon d'écriture ou un tampon à la fois de lecture et d'écriture pour mémoriser des données de rendu associées à une surface hors écran qui doit être affichée après un traitement ultérieur dans un système graphique ;
identifier un premier tampon dans le groupe de tampons comme tampon d'écriture pour la surface hors écran, de sorte que des données de rendu associées à la surface hors écran sont écrites dans le premier tampon pendant une opération d'écriture ; et
identifier un deuxième tampon dans le groupe de tampons comme tampon de lecture pour la surface hors écran, de sorte que des données de rendu associées à la surface hors écran sont lues dans le deuxième tampon pendant une opération de lecture.

2. Procédé selon la revendication 1, dans lequel l'allocation du groupe de tampons comprend l'allocation du groupe de tampons dans une ou plusieurs régions tampons du système graphique.

3. Procédé selon la revendication 2, dans lequel l'allocation du groupe de tampons dans lesdites une ou plusieurs régions tampons du système graphique comprend l'allocation du groupe de tampons soit dans une première région desdites une ou plusieurs régions tampons associée à des tampons de pixels soit dans une deuxième région desdites une ou plusieurs régions tampons associée à des matrices de pixels.

4. Procédé selon la revendication 1, comprenant en outre :
invoquer une fonction de sélection de tampon qui identifie le premier tampon comme étant le tampon de lecture et le deuxième tampon comme étant le tampon d'écriture.

5. Procédé selon la revendication 1, comprenant en outre :
générer des informations de rendu en faisant un rendu de la surface hors écran ; et
écrire les informations de rendu dans le premier tampon pendant l'opération d'écriture.

6. Procédé selon la revendication 1, comprenant en outre :
lire des informations concernant la surface hors écran dans le deuxième tampon pendant l'opération de lecture.

7. Procédé selon la revendication 1, dans lequel le premier tampon et le deuxième tampon sont des tampons différents, de sorte que le tampon d'écriture est différent du tampon de lecture.

8. Procédé selon la revendication 1, comprenant en outre :
allouer des tampons additionnels qui sont tous associés à une surface hors écran additionnelle utilisée dans un traitement graphique ;
identifier un troisième tampon dans les tampons additionnels comme tampon d'écriture pour la surface hors écran additionnelle, de sorte que des données de rendu associées à la surface hors écran sont écrites dans le troisième tampon pendant une opération d'écriture additionnelle ; et
identifier un quatrième tampon dans les tampons additionnels comme tampon de lecture pour la surface hors écran additionnelle, de sorte que des données de rendu associées à la surface hors écran additionnelle sont lues dans le quatrième tampon pendant une opération de lecture additionnelle.

9. Procédé selon la revendication 8, comprenant en outre :
combiner un contenu du deuxième tampon pour la surface hors écran, un contenu du quatrième tampon pour la surface hors écran additionnelle, et des données associées à une surface sur l'écran selon un ordre de superposition ; et
superposer la surface hors écran, la surface hors écran additionnelle et la surface sur l'écran dans un but d'affichage sur la base de l'ordre de superposition.

10. Procédé selon la revendication 9, dans lequel :
la surface hors écran comprend une surface bidimensionnelle, une surface tridimensionnelleou une surface vidéo ; et
la surface hors écran additionnelle comprend une surface bidimensionnelle, une surface tridimensionnelle ou une surface vidéo.

11. Support lisible par un ordinateur comprenant des instructions pour amener un ou plusieurs processeurs programmables à réaliser les étapes de l'une quelconque des revendications 1 à 10.

12. Dispositif comprenant :
des moyens pour allouer un groupe d'au moins trois tamponsdont chacun peut comprendre un tampon de lecture, un tampon d'écriture, ou un tampon à la fois de lecture et d'écriture pour mémoriser des données de rendu associées à une surface hors écran qui doit être affichée après un traitement ultérieur dans un système graphique ;
des moyens pour identifier un premier tampon dans le groupe de tampons comme tampon d'écriture pour la surface hors écran, de sorte que des données de rendu associées à la surface hors écran sont écrites dans le premier tampon pendant une opération d'écriture ; et
des moyens pour identifier un deuxième tampon dans le groupe de tampons comme tampon de lecture pour la surface hors écran, de sorte que des données de rendu associées à la surface hors écran sont lues dans le deuxième tampon pendant une opération de lecture.

13. Dispositif selon la revendication 12, comprenant en outre une ou plusieurs régions tampons, dans lequel les moyens pour allouer le groupe de tampons, les moyens pour identifier un premier tampon et les moyens pour identifier un deuxième tampon comprennent un ou plusieurs processeurs agencés pour allouer le groupe de tampons dans lesdites une ou plusieurs régions tampons.

14. Dispositif selon la revendication 13, dans lequel lesdits un ou plusieurs processeurs sont agencés pour allouer le groupe de tampons soit dans une première région desdites une ou plusieurs régions tampons associée à des tampons de pixels soit dans une deuxième région desdites une ou plusieurs régions tampons associée à des matrices de pixels.

15. Dispositif selon la revendication 13, dans lequel lesdits un ou plusieurs processeurs sont en outre agencés pour invoquer une fonction de sélection de tampon qui identifie le premier tampon comme étant le tampon de lecture et le deuxième tampon comme étant le tampon d'écriture.
